# EUROPEAN PATENT APPLICATION

(11) **EP 4 625 997 A1**
(43) Date of publication of application: **01.10.2025**
(21) Application number: 24165757.6
(22) Date of filing: 25.03.2024
(51) Int. Cl.: H04N 21/234, H04N 21/44, H04N 21/81

(54) **AI-DRIVEN ADAPTIVE REAL-TIME ADVERTISING SWAP MECHANISM FOR TRANSITIONING FROM INITIAL TO PERSONALIZED VIDEO CONTENT ON TV, AND METHOD FOR ITS USE**

(71) Applicant: MB Mazuju Ugdymas, 35239 Panevezys (LT)
(72) Inventor: Buika, Vilmantas, LT-35239 Panevezys (LT)
(74) Representative: Zaboliene, Reda

(57) **Abstract**

This invention introduces an innovative artificial intelligence-based (AI) adaptive mechanism for changing television advertisement content in real-time to personalized video-audio content, or even providing the option to completely miss any content, for example, hearing background music or to switch to no-sound mode, and seeing a blank screen during advertisements. This responds to modern consumer needs and expectations, who seeks to avoid long and repetitive advertisements, especially for children. The invention reflects the evolution of the role and perception of advertisements over the last twenty years, offering consumers the opportunity to transition from passive recipients to active creators of their leisure time. This is now possible thanks to advanced AI technologies that analyze and recognize the start and end of advertisements in real-time, even in cases where broadcasters do not allow fast-forwarding through ads. The invention is significant not only from technological point of view, but also from cultural, as it gives consumers control and freedom to decide how to manage their leisure time while watching television's translation content.

## Description

### FIELD OF THE INVENTION

The present invention relates to the application of artificial intelligence in the field of television advertising, and in particular to an adaptive mechanism for replacing, in real time, the standard (original) audiovisual content of an advertisement with personalised (altered) content. This solves the problem of matching the preferences of the individual consumer when watching TV by offering an innovative way to dynamically change the video signals according to the consumer's need.

### BACKGROUND ART

Over the past two decades, the content and character of TV advertising has undergone a dramatic change, moving from short commercials of a few minutes to long commercial inserts of 5-15 minutes. Today's advertising, which has become longer and more repetitive, sometimes seems to be an integral part of our daily routine, to the increasing dissatisfaction of viewers. People who are exposed to huge doses of advertising on a daily basis, both in the public space and on personal recreational tracking platforms, are increasingly craving alternatives. They are fed up with the same advertising content and instead want variety and personalisation - to the point of not even being able to see the advert at the time, but, for example, to hear their favourite music or to be immersed in the peace of a forest scenery during a break from their favourite TV show.

Bombardment of advertising has a particularly negative impact on children's psyche, encouraging premature interest in consumption and creating unrealistic expectations. This can reduce creativity, encourage excessive materialism and turn children into "zombie consumers" unable to critically engage with advertising messages without the ability to choose what is really good for them.

The need for an innovative/different approach to this problem - how to replace standard, often annoying advertising with personalised (audiovisual) content in real time, without sacrificing the flow of viewing - becomes apparent. This is where AI-driven adaptive mechanisms come in, not only to recognise the beginning and the end of an advertisement, but also to modify it to what the consumer would like/set to see. This means that instead of being forced to interrupt our favourite show for the inevitable commercials, we can enjoy personally meaningful content that reflects our interests and preferences.

This innovation opens up new opportunities in TV entertainment, taking a step towards personalising the viewer experience. At the same time, it addresses another increasingly pressing issue: the need to find a balance between the benefits of advertising for creators and the desire of viewers to avoid invasive and unwanted content. This invention is therefore not only technologically novel, but also culturally significant, as it responds to modern consumer expectations and their desire to take more control of their leisure time.

The state of the art analysis led to the discovery of document CN101077002A, published on 21 November 2007, which describes a system that detects when a commercial break in a broadcast programme begins and, if the viewer selects the fast-forward mode during the commercial break, the system selects suitable alternative content to be shown to the viewer. The alternative content may include images, videos and/or audio content. The system shall receive configuration information from the service provider or broadcaster specifying what alternative content will be displayed, when it will be displayed and what additional processing tasks are required. The service provider may charge the advertiser or content provider based on the number of views of the alternative content. However, the present invention focuses on changing the advertisement according to the playback speed chosen by the viewer, especially in fast viewing mode, whereas our invention is not dependent on the playback speed. In this system, the alternative content is selected according to predefined rules set by the service provider or broadcaster, while our invention is focused on delivering a personalised content. Also, the invention described in document CN101077002A does not detect and analyse the image (the beginning or the end of an advertisement), nor does it use artificial intelligence (AI) tools.

Document US2023050873A1, published on 16 February 2023, is also available. This invention includes a video service system and associated methods of operation which include processing of encoded video data. The process also includes obtaining the main programme identifier, which identifies the main content of the image, and segmentation. However, it is working with already known indexed content, does not use an AI tool, does not involve changing secondary/additional image segments without customising the content, and does not occur in real time.

There is also a document US2009228914A1, published on 10 September 2009, which describes a method and system for the delivery of personalised and localised television advertising consisting of an Ad Centre, an Intelligent Control Module and a Display/TV set. The system collects and processes information about advertisements, advertising agencies, advertisers and TV consumers, including subscriber information and publicly available or purchasable consumer information such as demographic data. Using artificial intelligence, mathematical and statistical techniques, the system generates a personalised and localised advertising schedule or set of advertisements that governs the appropriate placement of advertising at commercial times on some or all channels. However, it does not deal with the real-time identification of the beginning/end of the video stream in order to make appropriate changes.

In addition, a document CN110661987A, published on 7 January 2020, was discovered. This describes the method and system for replacing visual content. The method includes the following steps: scanning a sequence of images from the original video; extracting characteristic data for all objects in the video using object detection and object classification technology; selecting a suitable replacement image from a comprehensive database containing all relevant image information, artificial tags and image characteristic data; replacing the identified objects by the selected images, and adapting these images to ensure consistency with the original video context. This database can be applied in a wide range of areas, but does not operate in real time and follows predefined rules. Also, it does not deal with the entire flow (character recognition), but only with specific individual determined objects in that image.

The state of the art comes closest in document US2016182923A1, published on 23 June 2016. It includes the insertion of personalised ads into broadcast content viewed on smart TVs that can receive both broadcast and broadband content. Traditional methods use SCTE 35 markers in the broadcast stream to signal advertisement insertion points, but the present invention offers a more sophisticated approach that uses a dynamic adaptive stream over HTTP, also known as MPEG-DASH, transmitted over the broadcast network, to provide a more dynamic and personalised notification of advertisement timing and content. In Invention US2016182923A1, the information about the advertisements to be broadcast and their timing is already known, as it is provided by the service provider/distributor, so there is no need to analyse the footage itself in order to catch the beginning/end of the advertisement. This method allows the terminal to prepare in advance for the insertion of an advert by selecting the most relevant adverts or advertisements for the viewer from a selected list.

A detailed analysis of the state of the art reveals a number of serious technological problems that make it quite difficult to realise a real-time advertising replacement mechanism:
Analysing TV video streams in real time is extremely challenging due to the large amounts of data and the need to identify specific content in a very short period of time. This requires advanced technologies such as artificial intelligence and high computing power to ensure a smooth and accurate process for analysing audiovisual content.
The reaction time of the human eye is very short, typically around 200-250 milliseconds. This speed poses additional challenges when it comes to recognising the beginning of an advertisement and changing video content in real time. To ensure that the user does not notice the transition, the system must not only be able to instantly recognise the advertising signal, but also be able to change the content of the video quickly enough during this very short "window" of human reaction. This requires an efficient algorithm and then again high computing power to make the process invisible and seamless to the user.
Today's adverts are quite varied in content, format and style, and the plots of TV programmes can also change very quickly and unexpectedly. This variety and dynamism further complicates the process of advertisement recognition, as the system must be able to distinguish advertising from the main content through frequent and varied image changes. This makes artificial intelligence indispensable, as it can learn and adapt to these challenges by applying advanced image analysis and learning technologies that enable accurate and fast recognition of advertising in real time.
In addition, one of the most important aspects that is often overlooked in the debate on the personalisation of advertising is the role of the end-user in this process. Traditionally, the consumer is treated as a "blind recipient", to whom advertising is imposed without the possibility of choice or with the possibility of choosing between several inappropriate options (in this case we have a pseudo-choice). However, our invention highlights a fundamental new approach - empowering the end-user to actively participate not only in the selection of the advertising, but also to be able to opt out of the advertising altogether, replacing it with their own favourite music, or even opting out of it during the broadcast of the advertising by selecting a silent "empty frame" environment. This approach not only respects the consumer's choice, but also opens up new possibilities in the delivery of advertising, emphasising personal freedom.

To summarise, there are a number of different solutions known at the state of the art in this field, but no such solution with the above characteristics has been found in the available literature. Also, professionals working in this segment have not yet found (and do not see during the exhibitions) anything similar to be offered or realised in real life.

### SUMMARY OF THE INVENTION

The essence of the present invention is to develop an artificial intelligence-driven adaptive real-time ad-switching mechanism to change the original content of an advertising on television into personalised video and/or audio content, or the absence/abandonment of it. The invention answers a fundamental technical problem related to long and repetitive advertising that no longer meets the expectations and needs of modern consumers. Bombarded by advertising on a daily basis, people want to avoid or replace it, choosing instead of the standard advertising a suitable commercial, or their favourite music, or even the soothing sounds of nature.

It is important to emphasize that this invention also reflects a philosophical perspective on the role of advertising over the last twenty years and how this form of mass communication should change to better meet consumer preferences. This not only allows consumers to be "blind recipients", but also gives them the opportunity to actively choose what they would like to see or hear during their TV breaks.

The innovation is implemented using sophisticated technology, including artificial intelligence that analyses and recognises the beginning and end of advertising in real time, as there are still many broadcasters/systems where even using a remote control does not allow to manually scroll through the advertising, let alone change it. This process is particularly challenging due to the diversity and dynamism of advertising and television programmes. The invention highlights that, despite the speed of reaction of the human eye and the technological challenges, it is still possible to give consumers the opportunity to replace unwanted advertising with personalised audiovisual content, while respecting their choices.

### BRIEF DESRCIPTION OF DRAWINGS

Fig. 1 shows the current (state of the art) module system with no application of our invention.
Fig. 2 shows the overall system of modules of the present invention, which ensures the implementation of the invention.
Fig. 3 shows the detailed system of the AI (artificial intelligence) module.

### DESCRIPTION OF THE PREFERRED EMBODIMENTS

Our aim is to protect the innovative system and its method of use, which together form an AI-driven adaptive advertising swap mechanism. This system, which operates in real time and analyses audiovisual content using AI tools, makes it possible to identify the beginning and the end of an advertisement, and allows TV advertising to be swapped for personalised audiovisual content. The invention is designed to meet the needs and expectations of today's consumers, giving them more control and decision-making freedom over their recreational TV viewing experience.

Unadapted TV adverts can and often do cause stress for consumers, especially when they interrupt engaging content or appear at inappropriate times. Frequent and intense commercial breaks can upset viewers' emotional equilibrium, making them feel overwhelmed and increase their anxiety levels. In addition, adverts that are not in line with consumers' personal interests or values can cause dissatisfaction and negative emotions, adding to the stress of watching TV. Television advertising can have a particularly damaging effect on children, shaping inappropriate values and encouraging the imitation of negative habits and behavioural patterns. Children are particularly sensitive and prone to imitate the behaviour they see, and may become more susceptible to misunderstandings and less critical of the information presented in advertising.

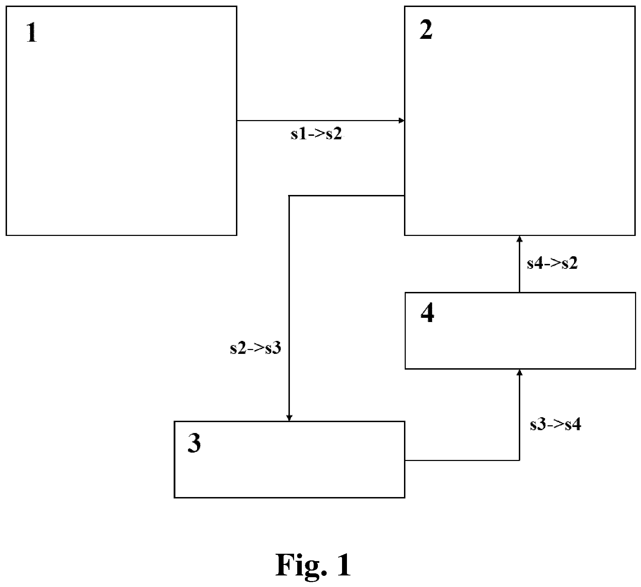

The structure of the current television broadcasting system is illustrated in Fig. 1 and is as follows:
1. TV programme broadcaster (1). For the purposes of this description, 'TV programme broadcaster' (1) means an organisation or body responsible for the creation, production and transmission of television content, including programmes, films and advertisements, to viewers via the various television platforms.
2. TV system (2). 'TV system' (2) is understood here as the aggregate of technologies and equipment receiving devices and user interface tools, consisting of signals received by broadcasters and devices in consumers' homes, which allow the viewing and control of television (video and audio (electromagnetic wave) output) content.
3. Consumer (3). 'A consumer', or 'viewer', is understood as a person, a group of people or an audience who may use the TV system in question (2).
4. TV system (2) 'remote control' (4). Typically a portable device designed to remotely control a TV set or other TV-related device, allowing the consumer to change channels, adjust volume, switch inputs and use other functions to optimise the TV viewing experience from anywhere in the room without having to physically touch the TV set or its connected devices.

Signals and their directions that are also important in the current TV broadcasting system (Fig. 1).
1. The prepared initial signal (s1 -> s2), shown in Fig. 1, is the audiovisual content coming from the TV broadcaster (1) to the TV system (2).
2. The TV signal to the consumer (s2 -> s3) comes from the TV system (2) to the consumer's (3) biological sensors (e.g. eyes, ears), which receive and process these signals in the brain system, interpreting them as different programmes, broadcasts (visual content).
3. The remote control (4) signal (s4 -> s2) comes from the remote control (4) to the TV system (2).
4. The consumer's (3) initiation signal (s3 -> s4) comes from the consumer (3) to the remote control (4) as the consumer (3) presses its corresponding buttons.

This current system (Fig. 1) relies on two main elements: the material produced by the TV broadcaster (1) and the TV system (2) of the consumer (3). Although the consumer (3) has a TV remote control (4), he/she often faces the constraint of not being able to skip the commercial 'breaks', and is forced to leave the commercials on as a background, even when he/she is engaged in other activities (e.g. tidying up the house while the commercials are playing while he/she is waiting for the commercials to finish, and, due to the similar audio background, is often unable to tell, whether the commercials are still playing, or whether the TV broadcast continues). This forces the consumer (3) to stand unwanted noise in their environment, creating an ambiguous and often undesirable experience.

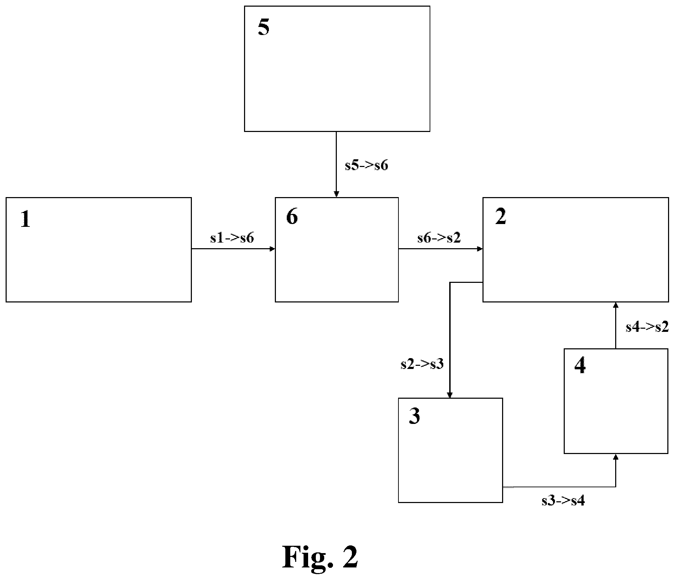

Fig. 2 shows the overall modular system of our invention, which ensures the implementation of the present invention. If compared to Fig. 1, two additional blocks (modules) are added: an alternative audiovisual content generator (5) and an artificial intelligence (AI) module (6):
1. An alternative audiovisual content generator (5) is a device or software component designed to generate an additional (modified/other/alternative) signal (s5) that can replace, in real time, the initial signal (s1) received from the TV programme broadcaster (1). It can be a signal from another broadcaster, it can also be any pre-prepared audiovisual content, for example: alternative prepared advertising content, a phrase on the screen, sounds and sights of nature, it can also be a silent environment with a blank/static picture.
2. The AI module (6) is a structure (or complex module) which has to analyse the initial signal (s1), catch the beginning of the advertisement, disconnect the initial signal (s1) and switch on the alternative signal (s5), then catch the end of the advertisement, disconnect the alternative signal (s5) and switch on the initial signal (s1).

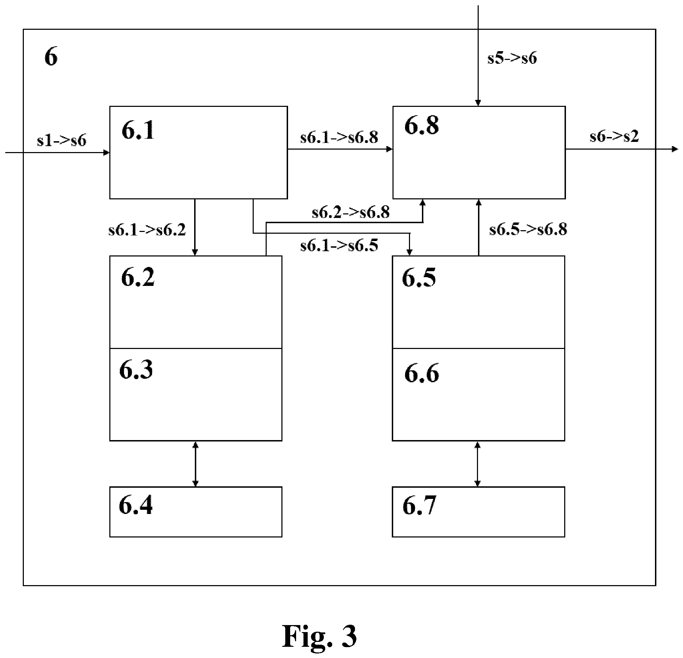

Fig. 3 shows the detailed system of the AI (artificial intelligence) module (6) with the following structure:
1. Signal analyser (6.1). It receives the initial signal (s1) and transmits it (s6.1 - > s6.2) to the advertisement beginning detector (6.2), and the signal analyser (6.1) also transmits this signal (s6.1 -> s6.5) to the advertisement ending detector (6.5). In parallel, the signal analyser (6.1) passes the initial signal to the signal swap module (6.8).
2. The advertisement beginning detector (6.2) analyses the initial signal (s1) and catches (detects) the moment when the advertisement begins, i.e.: the detector (6.2), which is designed to detect the beginning of the audiovisual stream, is a technological device with a detector protocol (6. 3), which (6.3) incorporates software tools to analyse the incoming television signal (s1) in real time, identifying the beginning of specific video and audio sequences, in order to adapt or modify the content instantaneously. 'Instantaneously' means in less than ~200ms (this time is determined on demand); which means that if the frame rate of the sequence is 25-30-60 frames/second, this should be done according to frames 8-6-3 respectively. In addition to the detector protocol (6.3), an artificial intelligence (AI) with the corresponding machine learning (ML) module 1 (6.4) is used to solve this problem. The detector protocol module (6.3) shall be trained together with the ML module 1 (6.4) until the advertisement beginning detector (6.2) is able to detect the beginning of an advertisement with a reasonable probability. Once the detection of the beginning of the advertisement has been achieved, the signal (s6.2 -> s6.8) shall be further transmitted to the signal swap module (6.8).
3. The advertisement end detector (6.5) analyses the initial signal (s1) and catches (detects) the moment when the advertisement ends, i.e.: the detector (6.5), which is designed to detect the end of an audiovisual stream, is a technological device with a detector protocol (6. 6), which (6.6) incorporates software tools to analyse the incoming television signal (s1) in real time, detecting the end of specific video and audio sequences, in order to adapt or modify the content instantaneously. 'Instantaneously' means in less than ~200ms (this time is determined on demand); which means that if the frame rate of the sequence is 25-30-60 frames/second, this should be done according to frames 8-6-3 respectively. In addition to the detector protocol (6.6), an artificial intelligence (AI) with the corresponding machine learning (ML) module 2 (6.7) is used to solve this problem. The detector protocol module (6.6) shall be trained together with the ML module 2 (6.7) until the advertisement end detector (6.5) is able to detect the end of the advertisement with a reasonable probability. Once the end of advertisement detection has occurred, the signal (s6.5 -> s6.8) shall be further transmitted to the signal swap module (6.8).
4. The signal swap module (6.8) is designed to collect all necessary signals from the signal analyser (6.1), the advertisement beginning detector (6.2) and the advertisement ending detector (6.5) in order to swap the initial signal (s1) for the alternative signal (s5), or vice versa, at the appropriate time, according to the defined protocol.

From a process point of view, the following sequence of steps takes place in this diagram (Fig. 2 and Fig. 3):
At the beginning we have a initial signal (s1 -> s6), which comes from the TV broadcaster (1) and goes to the signal analyser (6.1) of the DI module (6). This initial signal (s1) is analysed by the advertisement beginning detector (6.2) using the detector protocol module (6.3) trained with ML module 1 (6.4). As long as the beginning of the advertisement is not detected, the signal replacement module (6.8) sends the initial signal (s1) to the TV system (2). However, when the advertisement beginning detector (6.2) registers the beginning of the advertisement, it sends the corresponding signal (s6.2 -> s6.8) to the signal swap module (6.8), which replaces the initial signal (s1) by the alternative signal (s5) and transmits it to the TV system (2). Besides, the advertisement ending detector (6.5), which detects the moment when an advertisement ends by using the advertisement ending detector (6.5), operates the same way. When the end of the advertisement is detected, the signal swap module (6.8) receives the corresponding signal (s6.5 -> s6.8) from the advertisement ending detector (6.5) and swaps the alternative signal (s5) for the initial signal (s1). There is a continuous correlation of actions between the advertisement beginning and ending detectors (6.2 and 6.5) via the signal swap module (6.8). After that, you have to wait for the advertising to start again, and the process goes round and round (in a continuous cycle as long as the TV is on).

Additional embodiments, details and variations of the present invention are described below:
1. Typically, the learning of the advertisement beginning and ending detectors (6.2, 6.5) can be done in "factory settings" without the involvement of the consumer (3), but the consumer can also be involved in the process, i.e. if the consumer (3) sees that the advertisement beginning detector (6.2) has not detected the beginning of the advertisement at the right time, he can inform the system by means of the input options on the remote control (4) or in another designated environment (either local or external). The aforementioned remote control may also have a protection against malicious initiation of an "error", i.e.: the manipulation of a button or a combination of buttons on the remote control, e.g. a child presses a button or TV broadcasters organise a "mass attack" by simulating a stream of errors where there are no errors (the above protection is needed to safeguard the AI against the incorrect improvement). Similarly, if the consumer (3) detects that for whatever reason the advertisement ending detector (6.5) is not working properly (no switchover to the initial signal (s1) for a long period of time, or the switchover has occurred prematurely before the advertisement block has started), the system shall also be notified by means of an input (e.g. remote control (4)).
2. The remote control (4) or other external means may have the option of controlling the signals (s1 and s5) directly, i.e.: the consumer (3) may switch between the initial signal (s1) and the alternative signal (s5) or vice versa whenever he/she wishes. This may be particularly relevant for the development of the ML modules (6.4 and 6.7) or when carrying out other experiments/observations.
3. The alternative signal (s5) can include a wide range of audiovisual content: any range of sounds and any video stream. A monotone/signal or soundless environment is also possible. Video can also include static video or absence of video entirely.
4. The initial signal (s1) from the TV programme broadcaster (1) may be encoded in a variety of digital formats to ensure optimum video and audio quality and efficient data transmission. The AI module (6), responsible for the generation and replacement of alternative content, may (and must) have integrated decoding facilities to allow appropriate processing of different signal formats. The main encoding formats currently in use include: MPEG-2, which is often used in standard definition television broadcasts; MPEG-4 (or H.264), which has higher efficiency and is widely used for high-definition video transmission; and HEVC (H.265), which is designed for even higher-efficiency and highest-definition video transmission, including 4K and 8K. Other encoding formats may also be available.
5. The advertising beginning and advertising ending detectors (6.2 and 6.5) shall generate the corresponding signals (s6.2 -> s6.8 and s6.5 -> s6.8) for the signal swap module (6.8) when they, based on their respective protocol modules (6.3 and 6.4), have a high accuracy - for example, a 99.5% probability of detection (this number is called the sufficient detection rate). This means that these detectors (6.2 and 6.5) only start to operate (to send the corresponding signals to module 6.8) when the aforementioned level of sufficient detection has been reached, which ensures a minimum probability of error and which allows a signal/message to be sent to the swap module (6.8) with the aim of substituting an alternative signal (s5) for the original signal (s1), or vice versa. The above-mentioned adequate detection rate may also be a different value (greater or less than 99.5%).
6. The artificial intelligence (AI) module (6) for TV advertising modification can be implemented in different ways depending on the technological possibilities and consumer needs. Also the AI module (6) must have protection against software intrusion (both integrated and external). The first embodyment represents a stand-alone device that connects directly to the TV system (2), providing an easy and convenient way to add this functionality to existing home entertainment (TV) systems (2). The second embodyment is that the AI module (6) can be integrated directly into the TV system (2) at the manufacturer's level, providing consumers with up-front functionality without the need for additional equipment. The third embodyment is an external device which is inserted between the TV system (2) and the TV programme broadcaster (1), acting as an intermediate filter which modifies the received signal before it reaches the consumer's (3) TV system (2). Each of these options offers different advantages in terms of flexibility of installation, ease of use and the creation of a personalised user experience. The first embodyment, where the AI module (6) is a stand-alone device connected directly to the TV system (2), gives the consumer maximum control over the content (because everything is local). Meanwhile, the third embodyment mentioned above, which requires the insertion of an external device or system between the TV system (2) and the TV programme broadcaster (1), may offer additional functionality and customisation options, but also requires an arrangement with external service providers. This model may involve more complex service provision and content management arrangements, but offers the possibility of more advanced content modification solutions (without the need for various software updates or device changes) that can be managed in a centralised way.
7. As an important part of the invention, the alternative audiovisual content generator (5) may also be implemented as a local or external device. The local generator would be integrated directly into the consumer's TV system (2) or into the AI module (6), allowing fast and efficient generation or selection of alternative content based on the consumer's preferences and settings. In contrast, an external alternative content generator (5) would work with external servers or service providers that offer an extensive library of alternative content accessible via the internet or a dedicated network. This embodyment may provide a wider variety of content, but dependence on internet connections and external service providers may limit flexibility of use and require additional arrangements and possible payment for such a service in terms of access to and use of content.
8. By using appropriate (web-based) communication tools and by incorporating TV programme data from all over the world (country, region, city, countryside, locality) into the AI module (6) in real time, the content analysis process can be greatly facilitated by providing the module with information on which programme is to be broadcast and when. This information would allow the module to more efficiently determine the beginning and ending points of advertising, taking into account specific programmes and their broadcasting schedules. Given the large volume of data, it would make sense to apply geo-positioning of the viewer in order to narrow down the analysis of the data according to specific world regions or countries. This approach would allow the development of a global artificial intelligence module (6 ), which would operate individually in each region, using appropriate databases. In this way, module (6) could provide tailored content taking into account the diversity of local TV programmes and the geographical location of the viewer, increasing the level of personalisation and optimising the experience of the user (3). While the challenges of real-time updating of the database and ensuring data security need to be anticipated in the implementation of this system, the benefits in terms of personalisation of the user experience and more efficient advertising management would be truly significant.
9. The TV remote control (4), despite its convenience, has a limited functionality which, in order to realise the full scope of the present invention (including training of the DI module, error identification, manual switching of the s1 and s5 signals etc.), is not available on the market at the moment. This disadvantage can be avoided by appropriate programmes or applications replacing the remote control (4). Both the mobile phone app and the website environment can offer advanced features such as: more intuitive interface design, configuration of personal settings, availability of additional interactive features, and integration of advanced technologies such as voice commands or gesture recognition.
10. It is also possible to integrate the alternative audiovisual content generator (5) directly into the artificial intelligence (AI) module (6), enabling the device (5) to operate more independently, i.e.: the AI module (6) can create/generate or have pre-existing audiovisual content that can be used in the TV system (2).

In order to illustrate and describe the present invention, a description of preferred embodiments is given above. This is not an exhaustive or restrictive description that seeks to define the exact form or implementation option. The above description should be seen as an illustration rather than a limitation. Obviously, many modifications and variations may be apparent to experts in the field. An embodiment is selected and described for the purpose of providing those skilled in the art with the best explanation of the principles of the invention and the best practical application thereof for different embodiments, with different modifications suitable for the particular use or implementation. It is intended that the scope of the invention shall be defined by the appended claims and their equivalents, in which all such terms shall have the widest possible meaning, unless otherwise specified.

Embodiments described by those skilled in the art may include modifications that do not depart from the scope of the present invention as defined below.

## Claims

1. An AI-driven adaptive audiovisual/advertising content swapping system for transitioning from initial to alternative audiovisual content, comprising:
an audiovisual (TV programme) broadcaster (1) generating and transmitting a initial signal (s1) to a TV system (2);
a TV system (2) receiving the said initial signal;
a consumer/viewer (3);
a remote control (4);
**characterised in that** it has the following additional modules:
an alternative audiovisual content generator (5) - a device or software component (tool) designed to generate an alternative signal (s5) which can replace, in real time, the initial signal (s1) received from the TV programme broadcaster (1);
an artificial intelligence (AI) module (6), which is a structure or complex module that must analyse the initial signal (s1), detect the start of the advertisement, disconnect the initial signal (s1) and activate the alternative signal (s5), then detect the end of the advertisement, disconnect the
alternative signal (s5) and activate the initial signal (s1);
which enable the consumer (3) to choose which audiovisual content he/she wishes to see and/or hear.

2. The system according to claim 1, **characterised in that** said AI module (6) includes:
a signal analyser (6.1) which receives the initial signal (s1) and transmits it (s6.1 -> s6.2) to the advertisement beginning detector (6.2); in addition, the signal analyser (6.1) transmits the signal (s6.1 -> s6.5) to the advertisement ending detector (6.5) and to the signal swap module (6.8);
an advertisement beginning detector (6.2) which analyses the initial signal (s1) and catches the moment when the advertisement (or other audiovisual stream with appropriate specifications) begins, i.e.: the detector (6.2) is designed to detect the beginning of the audiovisual stream by means of a detector protocol module (6.3), which (6.3) incorporates software tools for analysing the incoming television signal (s1) in real time by detecting the beginning of specific video and audio sequences using the machine learning (ML) module 1 (6.4), wherein the detector protocol module (6. 3) is trained in conjunction with the MM module 1 (6.4) until the advertisement beginning detector (6.2) is able to detect the beginning of the advertisement with a reasonable probability; once the advertisement beginning has been detected, the signal (s6.2 -> s6.8) is further transmitted to the signal swap module (6.8);
an advertisement end detector (6.5), which analyses the initial signal (s1) and catches the moment when the advertisement ends, i.e.: the detector (6.5) is designed to detect the end of an audiovisual stream using the detector protocol module (6. 6), which (6.6) has integrated software tools to analyse the incoming TV signal (s1) in real time by detecting the end of specific video and audio sequences using machine learning (ML) module 2 (6. 7), where the detector protocol module (6.6) is trained in conjunction with the ML module 2 (6.7) until the advertisement end detector (6.5) is able to detect the end of the advertisement with a reasonable probability; once the end of the advertisement is detected, the signal (s6.5 -> s6.8) is further transmitted to the signal swap module (6.8);
a signal swap module (6.8) which collects all necessary signals from the signal analyser (6.1), the advertisement beginning detector (6.2) and the advertisement end detector (6.5) in order to take a decision to swap the initial signal (s1) for the alternative signal (s5) or vice versa at the appropriate time, according to the established protocol.

3. The system according to the preceding claims, **characterized in that** the training of the detectors (6.2, 6.5) may be carried out not only in the "factory settings" (excluding the consumer (3)), but also including the consumer (3), where:
if the consumer (3) sees that the advertisement beginning detector (6.2) has not detected the beginning of the advertisement in due time, he/she may inform the system by means of the input options in the remote control (4) or in any other dedicated environment (local or external); similarly, if the consumer (3) sees that for some reason the advertisement ending detector (6. 5) is not functioning correctly, i.e.: no switchover to the initial signal (s1) for a long time or the switchover has occurred prematurely before the advertising block has started, the system is also notified by means of an input, e.g. the remote control (4).

4. The system according to any one of the preceding claims, **characterised in that** the remote control (4) or other external means may be able to control the signals (s1 and s5) directly, i.e.:
the consumer (3) may switch between the signals from the initial signal (s1) and the alternative signal (s5) or vice versa as required.

5. The system according to any of the preceding claims, **characterised in that** said alternative signal (s5) may include a variety of audiovisual content: any range of sounds and any video stream; a monotone/signal or soundless environment is also possible, and the video signal may include a static image or no image at all.

6. The system according to any one of the preceding claims, **characterised in that** the initial signal (s1) sent from the TV programme broadcaster (1) may be encoded in a variety of digital formats in order to ensure optimum picture and sound quality and efficient data transmission; the AI module (6), responsible for the generation and replacement of the alternative content, may accordingly have integrated decoding facilities allowing for the appropriate processing of the various signal formats.

7. The system according to any of the preceding claims, **characterised in that** the AI module (6):
is a device that connects directly to a TV system (2) providing an easy and convenient way to incorporate this functionality into existing home entertainment (TV) systems (2); or is integrated directly into the TV system (2) at the manufacturer's level, providing consumers with upfront functionality without the need for additional equipment; or is an external device which is inserted between the TV system (2) and the TV programme broadcaster (1), functioning as an intermediate filter which modifies the received signal before it reaches the consumer's (3) TV system (2).

8. The system according to any of the preceding claims, **characterised in that** the alternative audiovisual content generator (5) may be implemented as a local or external device: a local generator would be integrated directly into the consumer's television system (2) or into the AI module (6), allowing the rapid and efficient generation or selection of alternative content based on the consumer's preferences and settings, independently of external sources; an external alternative content generator (5), on the other hand, would require a connection to external servers or service providers offering a wide library of alternative content, accessible via the Internet or a dedicated network.

9. The system according to any of the preceding claims, **characterised in that** the AI module (6) is global and collects detection hit experiences by working with the beginning and ending settings of advertisements in relation to specific programmes and their broadcast schedules in different countries/regions/locations.

10. The system according to any of the preceding claims, **characterised in that** the remote control (4) may be a mobile phone application with advanced functionality of the remote control (4) or a web page environment through which the functionality of the TV system (2) can be entirely controlled.

11. The system according to any one of the preceding claims, **characterised in that** an alternative audiovisual content generator (5) is directly integrated into an artificial intelligence (AI) module (6), enabling this device (5) to operate in a more independent manner, i.e.: the AI module (6) is capable of creating/generating or pre-possessing audiovisual content for use in a TV system (2).

12. A method for using an AI-driven adaptive mechanism to modify audiovisual (advertising) content for transitioning from the initial to an alternative audiovisual content, comprising the following steps:
the generation and transmission of a initial signal (s1) towards the TV system (2);
displaying/voicing the said signal (s1) to the consumer (3) using the TV system (2);
**characterised in that** it includes the following steps:
transmission of the prepared initial signal (s1) to the signal analyser (6.1) of the AI module (6);
analysis of the said initial signal (s1) by means of the advertisement beginning detector (6.2) in combination with the detector protocol module (6.3) trained with ML module 1 (6.4) to detect the beginning of the advertisement;
in case of an advertising beginning detection event, transfer of the signal (s6.2 -> s6.8) to the signal swap module (6.8);
swapping the initial signal (s1) for the alternative signal (s5) using the signal swap module (6.8) when the advertising block has started;
transmission of the alternative signal (s5) to the TV system (2); analysis of the said initial signal (s1) by means of the advertising end detector (6.5) in combination with the detector protocol module (6.6) trained with ML module 2 (6.7) to detect the end of the advertising;
in case of an advertising end detection event, transmission of the signal (s6.5 -> s6.8) to the signal swap module (6.8);
swapping the alternative signal (s5) for the initial signal (s1) using the signal swap module (6.8) when the advertising block has ended;
transmission of the initial signal (s1) to the TV system (2);
where:
a correlation of actions takes place between the advertising beginning detector (6.2) and the advertising end detector (6.5) via the signal swap module (6.8).

13. The method according to claim 12, **characterised in that** it enables the consumer (3) to contribute to the improvement of the detectors (6.2 and 6.5) by means of the remote control (4) by reporting errors to the AI module (6) if they occur, e.g. incorrectly set the beginning of an advertisement, incorrectly set the end of an advertisement, an alternative signal (s5) being provided when the initial signal (s1) should be provided, and vice versa.

14. The method according to claims 12 to 13, **characterised in that** it enables the consumer (3), by means of the remote control (4), to trigger the signals (s1 or s5) as desired, independently of the signal transmitted by the signal swap module (6.8).

15. The method according to claims 12 to 14, **characterised in that** the AI module (6) is a global AI module (6) which incorporates, by means of appropriate communication means, real-time data of television programmes for the whole world in a country/region or a city/locality in order to enable this global module (6) to determine more efficiently the beginning and the ending points of advertisements, taking into account the specific programmes and their broadcast schedules in the different countries/localities/worldwide.
